# EUROPEAN PATENT APPLICATION

(11) **EP 4 749 472 A1**
(43) Date of publication of application: **27.05.2026**
(21) Application number: 25217406.5
(22) Date of filing: 20.11.2025
(51) Int. Cl.: G06F 16/23, G06F 16/901

(54) **OPERATION METHOD AND RELATED APPARATUS FOR GRAPH DATABASE**

(30) Priority: 21.11.2024 CN 202411680248
(71) Applicant: Alipay (Hangzhou) Digital Service Technology Co., Ltd., Hangzhou, Zhejiang 310000 (CN)
(72) Inventor: YUAN, Xiaohua, Hangzhou, Zhejiang Province, 310000 (CN); ZHOU, Meng, Hangzhou, Zhejiang Province, 310000 (CN)
(74) Representative: Winter, Brandl - Partnerschaft mbB

(57) **Abstract**

This specification provides an operation method and related apparatus for a graph database. The method includes: acquiring an operation statement initiated by a user for the graph database; parsing the operation statement and determining, according to a result of the parsing, an object to be operated of the operation statement, the object to be operated including any one of a target node, a target edge, a target property of a target node, or a target property of a target edge; and determining whether the object to be operated is prohibited from being operated on, and if not, locking the object to be operated and, upon completion of the locking, executing a plurality of operations included in the operation statement on the object to be operated.

## Description

### TECHNICAL FIELD

One or more embodiments of this specification relate to the technical field of databases, and in particular, to an operation method and related apparatus for a graph database.

### BACKGROUND

A graph database is a type of database system specifically designed to store and query graph data. Graph data mainly includes nodes, edges, and properties of the nodes and edges. The nodes represent entities, the edges represent relationships between entities, and the properties are typically key-value pairs attached to the nodes or edges to describe attributes of the nodes or edges.

In many cases, a plurality of users may simultaneously operate on the same node or edge and its properties in a graph database. For example, if user A is deleting a node X in the graph database while user B attempts to modify a property of the node X, a conflict arises. If user A's operation is committed first, user B's operation will fail because the node X can no longer be found in the graph database, severely affecting user experience and degrading database performance.

### SUMMARY

In view of this, one or more embodiments of this specification provide an operation method and related apparatus for a graph database.

In a first aspect, this specification provides an operation method for a graph database, where the graph database includes nodes, edges, and properties of the nodes and the edges, where when a node or edge is locked, the node or edge and all properties of the node or edge are prohibited from being operated on, and when any property of all properties of a node or edge is locked, the property and the node or edge are prohibited from being operated on, the method including:
acquiring an operation statement initiated by a user for the graph database;
parsing the operation statement and determining, according to a result of the parsing, an object to be operated of the operation statement, the object to be operated including any one of a target node, a target edge, a target property of a target node, or a target property of a target edge; and
determining whether the object to be operated is prohibited from being operated on, and if not, locking the object to be operated and, upon completion of the locking, executing a plurality of operations included in the operation statement on the object to be operated.

In a second aspect, this specification provides an operation apparatus for a graph database, where the graph database includes nodes, edges, and properties of the nodes and the edges, where when a node or edge is locked, the node or edge and all properties of the node or edge are prohibited from being operated on, and when any property of all properties of a node or edge is locked, the property and the node or edge are prohibited from being operated on, the apparatus including:
an acquisition unit, configured to acquire an operation statement initiated by a user for the graph database;
a determination unit, configured to parse the operation statement and determine, according to a result of the parsing, an object to be operated of the operation statement, the object to be operated including any one of a target node, a target edge, a target property of a target node, or a target property of a target edge; and
an operation execution unit, configured to determine whether the object to be operated is prohibited from being operated on, and if not, lock the object to be operated and, upon completion of the locking, execute a plurality of operations included in the operation statement on the object to be operated.

Accordingly, this specification further provides a computing device including a memory and a processor, the memory having a computer program or instructions executable by the processor stored therein, and the processor, when executing the computer program or instructions, performing the operation method for a graph database according to the first aspect described above.

Accordingly, this specification further provides a computer-readable storage medium having a computer program or instructions stored therein, the computer program or instructions, when executed by a processor, performing the operation method for a graph database according to the first aspect described above.

Accordingly, this specification further provides a computer program product including a computer program or instructions, the computer program or instructions, when executed by a processor, performing the operation method for a graph database according to the first aspect described above.

In summary, this application allows nodes, edges, properties of nodes, and properties of edges in a graph database to be locked individually. Furthermore, when a node or edge is locked, the node or edge and all properties of the node or edge are prohibited from being operated on, and when any property of all properties of a node or edge is locked, the property and the node or edge are prohibited from being operated on. Based on this, when the graph database receives an operation statement initiated by a user, it first determines whether the object to be operated of the operation statement is prohibited from being operated on. If the object to be operated is not prohibited, the object to be operated can be locked, and the corresponding operations can be executed, thereby preventing other users from performing operations on the same object to be operated simultaneously. In this way, conflicts and confusion arising from a plurality of users simultaneously operating on the same node or edge and its properties in the graph database are avoided. Furthermore, since each property of a node or edge can be locked individually, a plurality of users can concurrently operate on different properties of the same node or edge, reducing multi-user blocking and enhancing the performance of the graph database.

### BRIEF DESCRIPTION OF THE DRAWINGS

FIG. 1 is a schematic diagram of a system architecture according to an exemplary embodiment;
FIG. 2 is a schematic flow diagram of an operation method for a graph database according to an exemplary embodiment;
FIG. 3 is a schematic flow diagram of a multi-user graph model editing process according to an exemplary embodiment;
FIG. 4 is a schematic structural diagram of an operation apparatus for a graph database according to an exemplary embodiment; and
FIG. 5 is a schematic structural diagram of a computing device according to an exemplary embodiment.

### DETAILED DESCRIPTION

Exemplary embodiments are described in detail herein, and examples of the exemplary embodiments are shown in the drawings. When the following description involves the drawings, unless otherwise indicated, the same numerals in different drawings represent the same or similar elements. The implementations described in the following exemplary embodiments are not all the implementations consistent with one or more embodiments of this specification. Rather, they are merely examples of apparatuses and methods consistent with some aspects of one or more embodiments of this specification, as detailed in the appended claims.

It is to be noted that in other embodiments, the steps of corresponding methods are not necessarily performed according to a sequence shown and described in this specification. In some other embodiments, the methods may include more or fewer steps than those described in this specification. In addition, a single step described in this specification may be divided into a plurality of steps for description in other embodiments, and a plurality of steps described in this specification may be combined into a single step for description in other embodiments.

It is to be noted that the term "a plurality of" mentioned in this application refers to two or more.

In addition, the user information (including but not limited to user device information and personal information) and data (including but not limited to data for analysis, stored data, or displayed data) involved in this application are all information and data authorized by the user or fully authorized by the relevant parties. Furthermore, the collection, use, and processing of such data need to comply with the applicable laws, regulations, and standards of the relevant countries and regions, and provide corresponding operation interfaces allowing users to grant or deny authorization.

As described above, in many cases, a plurality of users may simultaneously operate on the same node or edge and its properties in a graph database. For example, if user A is deleting a node X in the graph database while user B attempts to modify a property of the node X, a conflict arises. If user A's operation is committed first, user B's operation will fail because the node X can no longer be found in the graph database, severely affecting user experience and degrading database performance.

In addition, it is to be noted that in conventional graph databases, nodes, edges, and their properties are typically managed collectively, as they together form the complete structure of the graph data. This unified management approach simplifies the data model, making queries and operations more straightforward and efficient. For example, a node and all its properties may be stored together in the same data row of a data table. Based on this, in some possible implementations, to avoid conflicts arising when a plurality of users simultaneously operate on the same node or edge and its properties, the node or edge and its properties can be locked collectively. For example, user A may first lock a node X and all its properties collectively (e.g., by applying a row-level lock on the data row of the node X and its properties), thereby preventing other users from performing operations on the node X and its properties.

However, nodes and edges typically have a plurality of properties, and different users may wish to operate on different properties of the same node independently. Since these operations do not inherently conflict, they can be performed concurrently. Locking the node and all its properties collectively in such cases would instead cause user blocking and degrade database performance.

Based on this, this specification provides a technical solution in which nodes, edges, properties of nodes, and properties of edges in a graph database can be individually locked. Furthermore, when a node or edge is locked, the node or edge and all properties of the node or edge are prohibited from being operated on, and when any property of all properties of a node or edge is locked, the property and the node or edge are prohibited from being operated on. Based on this, when the graph database receives an operation statement initiated by a user, it first determines whether the object to be operated of the operation statement is prohibited from being operated on. If the object to be operated is not prohibited, the object to be operated can be locked, and a plurality of operations included in the operation statement can be executed, thereby preventing other users from performing operations on the same object to be operated simultaneously. In this way, conflicts and confusion arising from a plurality of users simultaneously operating on the same node or edge and its properties in the graph database are avoided. Furthermore, since each property of a node or edge can be locked individually, a plurality of users can concurrently operate on different properties of the same node or edge, reducing multi-user blocking and enhancing the performance of the graph database.

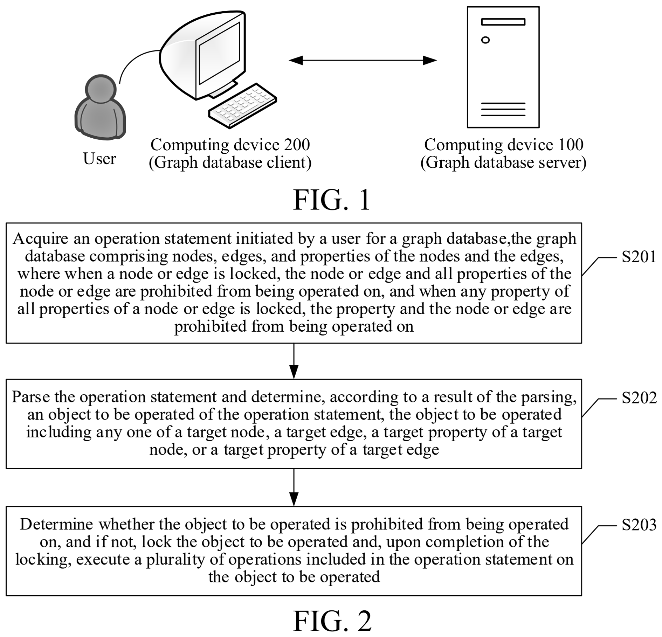

Referring to FIG. 1, FIG. 1 is a schematic diagram of a system architecture according to an exemplary embodiment. One or more embodiments provided in this specification can be specifically implemented within the system architecture shown in FIG. 1 or within a similar system architecture. As shown in FIG. 1, the system architecture may include a computing device 100 and a computing device 200, where computing device 100 hosts a graph database server, and computing device 200 hosts a graph database client.

In an illustrated implementation, the graph database client on the computing device 200 may provide a visual interface associated with the graph database. The visual interface may display a graph model of the graph database, where the graph model serves as the foundation of the graph database and defines the nodes, edges, and properties of the nodes and the edges within the graph database.

In an illustrated implementation, the nodes and the edges defined in the graph model, along with the properties of the nodes and the edges, can be stored and managed independently, that is, the nodes and the edges are stored in one location and managed independently, while the properties of the nodes and the edges are stored in another location and managed independently. For example, a node may be stored in a single data row, while a plurality of properties of the node are stored in a plurality of separate data rows. The same applies to edges and their properties.

Alternatively, in an illustrated implementation, nodes, edges, properties of nodes, and properties of edges can all be stored and managed independently, that is, nodes are stored in one location and managed independently, edges in another location and managed independently, properties of nodes in a separate location and managed independently, and properties of edges in another location and managed independently, which are not specifically limited in this specification.

In this way, nodes, edges, properties of nodes, and properties of edges in the graph database can be individually locked. Furthermore, to prevent operational conflicts, when a node or edge is locked, the node or edge and all properties of the node or edge can be prohibited from being operated on, and when any property of all properties of a node or edge is locked, the property and the node or edge can be prohibited from being operated on.

In an illustrated implementation, the user can use an input device provided by the computing device 200 (such as a mouse, keyboard, or touchscreen) to perform editing operations on the graph model displayed in the visual interface provided by the graph database client. In particular, the user may perform editing operations on the nodes, edges, properties of nodes, or properties of edges defined in the graph model.

Exemplarily, editing operations on the graph model may include deleting a node or edge defined in the graph model, modifying the originally defined node type, adding a new property to a node or edge, modifying the data type of an existing property, or the like, which are not specifically limited in this specification.

Further, the graph database client on the computing device 200 can, in response to a user performing an editing operation on the graph model, generate a corresponding operation statement and transmit the operation statement to the graph database server (i.e., the graph engine) on the computing device 100. In an illustrated implementation, the operation statement may be a data definition language (DDL) statement, which is not specifically limited in this specification.

Accordingly, the graph database server on the computing device 100 may acquire the operation statement sent by the graph database client, parse the operation statement, and determine, according to the result of the parsing, the object to be operated of the operation statement. The object to be operated may be any one of a target node, a target edge, a target property of the target node, or a target property of the target edge of the plurality of nodes, edges, and their properties defined in the graph model. It is to be noted that the target property of the target node refers to one property of a plurality of properties of the target node. Similarly, the target property of the target edge refers to one property of a plurality of properties of the target edge. The two target properties are distinct from each other.

Further, the graph database server may determine whether the object to be operated is prohibited from being operated on. If the object to be operated is prohibited from being operated on, the current operation cannot be executed. If the object to be operated is not prohibited from being operated on, the graph database server may lock the object to be operated and, upon completion of the locking, execute a plurality of operations included in the operation statement on the object to be operated. For further details, reference may be made to the embodiment corresponding to FIG. 2, which is not repeated herein.

Thus, in this application, by independently storing and managing the nodes, edges, and properties of the nodes and the edges in the graph database, the nodes and the edges can be locked individually, and each property of the nodes and the edges can also be locked individually. In this manner, conflicts and confusion arising from a plurality of users simultaneously operating on the same node or edge and its properties in the graph database are avoided. Furthermore, since each property can be locked individually, a plurality of users can concurrently operate on different properties of the same node or edge, reducing multi-user blocking and enhancing the performance of the graph database.

In an illustrated implementation, the computing device 100 shown in FIG. 1 may be a server having the above functions, or a server cluster including a plurality of servers. The computing device 200 may be a smart wearable device, smartphone, tablet computer, laptop, desktop computer, or the like, having the above functions, which is not specifically limited in this specification.

It is to be understood that the system architecture shown in FIG. 1 is provided for exemplary illustration only. In some possible implementations, the system architecture may further include additional devices, such as a plurality of computing devices 200 used by other users, which are not specifically limited in this specification.

Referring to FIG. 2, FIG. 2 is a schematic flow diagram of an operation method for a graph database according to an exemplary embodiment. The method can be applied to the system architecture shown in FIG. 1, specifically to the graph database server within the system architecture shown in FIG. 1. The graph database includes nodes, edges, and the properties of the nodes and the edges; and the nodes, edges, and the properties of the nodes and the edges are stored and managed independently. As shown in FIG. 2, the method may specifically include the following steps S201 to S203.

At step S201, an operation statement for the graph database initiated by a user is acquired. The graph database includes nodes, edges, and properties of the nodes and the edges. When a node or edge is locked, the node or edge and all properties of the node or edge are prohibited from being operated on, and when any property of all properties of a node or edge is locked, the property and the node or edge are prohibited from being operated on.

In an illustrated implementation, as described above, the graph database server may acquire an operation statement for the graph database initiated by the user via the graph database client. In particular, the operation statement may be directed to the graph model in the graph database. For details, reference may be made to the embodiment corresponding to FIG. 1, which is not repeated herein.

As described above, the graph model defines nodes, edges, and the properties of the nodes and the edges. Furthermore, the nodes, edges, and the properties of the nodes and the edges are stored and managed independently and can be locked individually. Moreover, when a node or edge is locked, the node or edge and all properties of the node or edge are prohibited from being operated on, and when any property of all properties of a node or edge is locked, the property and the node or edge are prohibited from being operated on.

In an illustrated implementation, nodes and edges may be stored in a first data table, and the properties of the nodes and the edges may be stored in a second data table. Alternatively, in an illustrated implementation, nodes may be stored in the first data table, edges in the second data table, properties of nodes in a third data table, and properties of edges in a fourth data table, which are not specifically limited in this specification.

It is to be noted that the first data table, the second data table, the third data table, and the fourth data table described above may be different data tables, or may be different partitions of the same data table, which is not specifically limited in this specification.

In particular, the graph model may include metadata of nodes and edges, as well as metadata of the properties of the nodes and the edges, which together constitute the definition of the nodes, edges, and their properties. The nodes, edges, and the properties of the nodes and the edges being stored and managed independently may refer to the metadata of the nodes and the edges and the metadata of the properties of the nodes and the edges being stored and managed independently. Accordingly, nodes and edges being stored in the first data table may refer to the metadata of the nodes and the edges being stored in the first data table, and the metadata of different nodes and edges may be located in different data rows of the first data
table. Accordingly, the properties of the nodes and the edges being stored in the second data
table may refer to the metadata of the properties of the nodes and the edges being stored in the second data table, and the metadata of different properties of the nodes and the edges may be located in different data rows of the second data table.

Accordingly, the above prohibition on operating a node or edge and all its properties when the node or edge is locked may refer to a situation where, when the data row of the metadata of the node or edge is locked, the data row of the node or edge and the data rows of all the properties of the node or edge, are prohibited from being operated on. Accordingly, the above prohibition on operating a property and a node or edge when any property of all properties of the node or edge is locked may refer to a situation where, when the data row of the metadata of any property of all properties of the node or edge is locked, the data row of the metadata of the property and the data row of the metadata of the node or edge are prohibited from being operated on.

In an illustrated implementation, the metadata of a node may include a node type, such as a company node, an employee node, a user node, or a product node.

In an illustrated implementation, the metadata of an edge may include an edge type, a source node type (e.g., the user node or product node described above), and a target node type (e.g., the user node or product node described above) of the edge.

In an illustrated implementation, the metadata of a property of a node may include a property type (or property name), such as name, position, and years of service, and may include a data type of a property value. For example, the data type of the name property may be a string, the data type of the position property may be a string, and the data type of the years of service property may be an integer, such as Integer or long, which is not specifically limited in this specification.

In an illustrated implementation, the metadata of a property of an edge may include a property type, such as a superior-subordinate relationship, a friendship relationship, a purchase relationship, and a relationship start time, and may include a data type of a property value. For example, the data types of the superior-subordinate relationship, friendship relationship, and purchase relationship may be boolean, while the data type of the relationship start time may be date, which is not specifically limited in this specification.

Exemplarily, a code example of a graph model may be as follows:

```
    "node":
    [{
    "typeName":"person"
    "properties": {
    "name":"string"
    }
    }]
    "edge":
    [{
    "type":"edge1"
    "src_type":"person"
    "dst_type":"person"
    "properties": {
    "Friend": boolean
    }
    }]
```

As shown above, the graph model defines a node type of person, and a property type of the node include name, with the data type of the property value of the property type being string. The edge type is edge1, with a source node type (src_type) of person and a target node type (dst_type) of person. A property type of the edge includes a friendship relationship, and the data type of the property value of the property type is boolean.

In an illustrated implementation, assuming that the metadata of nodes and edges are stored in a first data table, and the metadata of the properties of the nodes and the edges are stored in a second data table, the above node "person" may be stored in a data row of the first data table, while the property "name":"string" may be stored in a data row of the second data table and be associated with the node "person". Similarly, the edge "edge1" may be stored in a data row of the first data table, while "friendship": boolean may be stored in a data row of the second data table and be associated with the edge "edge1".

At Step S201, the operation statement is parsed, and an object to be operated of the operation statement is determined according to a result of the parsing, the object to be operated including any one of a target node, a target edge, a target property of a target node, or a target property of a target edge.

Further, the graph database server may parse the acquired operation statement, and determine, according to the result of the parsing, the object to be operated of the operation statement. The object to be operated may be any one of a target node, a target edge, a target property of the target node, or a target property of the target edge of the plurality of nodes, edges, and their properties defined in the graph model, which is not specifically limited in this specification. Alternatively, in some possible implementations, the target object to be operated may be any one or more of a target node, a target edge, a target property of a target node, or a target property of a target edge. It may be a plurality of target nodes, a plurality of target edges, a plurality of target properties of a target node, a plurality of target properties of a target edge, or the like, which is not specifically limited in this specification.

At step S203, it is determined whether the object to be operated is prohibited from being operated on, and if not, the object to be operated is locked and, upon completion of the locking, a plurality of operations included in the operation statement are executed on the object to be operated.

Further, after determining the object to be operated, the graph database server can further determine whether the object to be operated is prohibited from being operated on. In an illustrated implementation, if the object to be operated is prohibited from being operated on, the current operation cannot be executed. In an illustrated implementation, if the object to be operated is not prohibited from being operated on, the graph database server may lock the object to be operated and, upon completion of the locking, execute a plurality of operations included in the operation statement on the object to be operated. Further, after the plurality of operations are completed, the graph database server may release the lock on the object to be operated.

In an illustrated implementation, assuming the object to be operated is a target node, when the graph database server determines that the object to be operated is not prohibited from being operated on, locking the object to be operated may specifically include: determining whether the target node is locked; further determining, if the target node is not locked, whether the plurality of properties of the target node are locked; and determining, if the plurality of properties (or all properties) of the target node are not locked, that the target node is not prohibited from being operated on, and further locking the target node to prevent other users from performing operations on the target node and all properties of the target node.

Further, upon completion of the locking, the graph database server can execute the plurality of operations included in the operation statement on the target node, such as deleting the target node or modifying the node type of the target node, which is not specifically limited in this specification.

Further, after the plurality of operations included in the operation statement have been executed, the graph database server can release the lock on the target node to allow subsequent operations by other users.

In an illustrated implementation, assuming the object to be operated is a target edge, when the graph database server determines that the object to be operated is not prohibited from being operated on, locking the object to be operated may specifically include: determining whether the target edge is locked; further determining, if the target edge is not locked, whether the plurality of properties of the target edge are locked; and determining, if the plurality of properties (or all properties) of the target edge are not locked, that the target edge is not prohibited from being operated on, and further locking the target edge to prevent other users from performing operations on the target edge and all properties of the target edge.

Further, upon completion of the locking, the graph database server can execute the plurality of operations included in the operation statement on the target edge, such as modifying the edge type of the target edge, modifying the source node type of the target edge, or modifying the target node type of the target edge, which is not specifically limited in this specification.

Further, after the plurality of operations included in the operation statement have been executed, the graph database server can release the lock on the target edge to allow subsequent operations by other users.

In an illustrated implementation, assuming the object to be operated is a target property of a target node, when the graph database server determines that the object to be operated is not prohibited from being operated on, locking the object to be operated may specifically include: determining whether the target node is locked; further determining, if the target node is not locked, whether the target property of the target node is locked; and determining, if the target property of the target node is not locked, that the target property of the target node is not prohibited from being operated on, and further locking the target property of the target node to prevent other users from performing operations on the target node and the target property of the target node.

Further, upon completion of the locking, the graph database server can execute the plurality of operations included in the operation statement on the target property of the target node, such as deleting the target property, adding the target property, or modifying the data type of the property value of the target property, which is not specifically limited in this specification.

Further, after the plurality of operations included in the operation statement have been executed, the graph database server can release the lock on the target property of the target node to allow subsequent operations by other users.

In an illustrated implementation, assuming the object to be operated is a target property of a target edge, when the graph database server determines that the object to be operated is not prohibited from being operated on, locking the object to be operated may specifically include: determining whether the target edge is locked; further determining, if the target edge is not locked, whether the target property of the target edge is locked; and determining, if the target property of the target edge is not locked, that the target property of the target edge is not prohibited from being operated on, and further locking the target property of the target edge to prevent other users from performing operations on the target edge and the target property of the target edge.

Further, upon completion of the locking, the graph database server can execute the plurality of operations included in the operation statement on the target property of the target edge, such as deleting the target property, adding the target property, or modifying the data type of the property value of the target property, which is not specifically limited in this specification.

Further, after the plurality of operations included in the operation statement have been executed, the graph database server can release the lock on the target property of the target edge to allow subsequent operations by other users.

It is to be noted that the specific implementation of the locking process is not particularly limited in this specification. In an illustrated implementation, the graph database server may use a row-level lock when performing the locking process.

In an illustrated implementation, assuming that the nodes and the edges defined in the graph model are stored in a first data table, and that the metadata of the target node or the target edge is located in a corresponding first data row of the first data table, the graph database server, when determining whether the target node or the target edge is locked, may specifically include: determining whether the first data row of the metadata of the target node or the target edge is locked.

It is to be noted that the first data row referred to in the embodiments of this specification denotes the data row of the target node or the target edge, and does not refer to any specific, fixed data row.

In an illustrated implementation, assuming that the metadata of properties of the node and edge defined in the graph model is stored in a second data table, and the metadata of the plurality of properties of the target node or the target edge is stored in a plurality of corresponding data rows of the second data table, the graph database server, when determining whether the plurality of properties of the target node or the target edge are locked, may specifically include: determining whether the plurality of data rows of the metadata of the plurality of properties of the target node or the target edge are locked.

In an illustrated implementation, assuming that the metadata of the target property of the target node or the target edge is stored in a corresponding second data row of the second data table, the graph database server, when determining whether the target property of the target node or the target edge is locked, may specifically include: determining whether the second data row of the metadata of the target property of the target node or the target edge is locked.

It is to be noted that the second data row referred to in the embodiments of this specification denotes the data row of the target property of the target node or the target edge, and does not refer to any specific, fixed data row.

Accordingly, when the graph database server performs a locking process on the target node or the target edge, the process may specifically include: locking the first data row of the metadata of the target node or the target edge. Further, upon completion of the locking, the server can execute the plurality of operations included in the operation statement on the metadata of the target node or the target edge recorded in the first data row. Further, after the operations have been executed, the lock on the first data row may be released.

Accordingly, when the graph database server performs a locking process on a target property of the target node or the target edge, the process may specifically include: locking the second data row of the metadata of the target property of the target node or the target edge. Further, upon completion of the locking, the server can execute the plurality of operations included in the operation statement on the metadata of the target property of the target node or the target edge recorded in the second data row. Further, after the operations have been executed, the lock on the second data row may be released.

In an illustrated implementation, upon completion of the locking, the graph database server may notify other users that the current object to be operated has been locked and send the updated version of the current graph model to the other users, etc., which is not specifically limited in this specification.

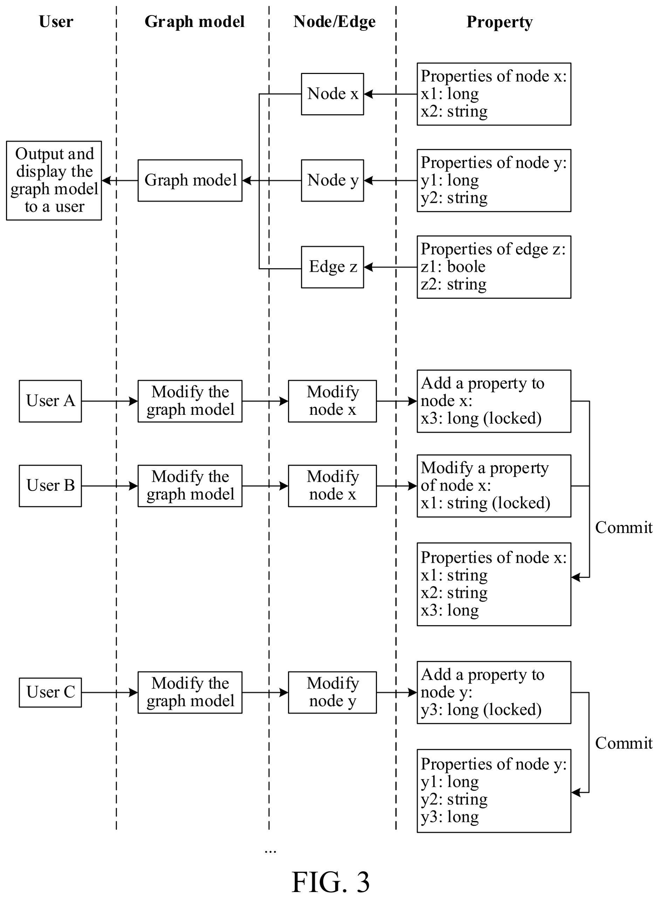

Exemplarily, referring to FIG. 3, FIG. 3 is a schematic flow diagram of a multi-user graph model editing process according to an exemplary embodiment. As shown in FIG. 3, the graph model defines a plurality of nodes and edges and their properties, and the graph model is divided into two parts: one part includes the nodes and the edges, and the other part includes the properties of the nodes and the edges. That is, the nodes, edges, and the properties of the nodes and the edges in the graph model are stored and managed independently. In particular, as shown in FIG. 3, the graph model includes: a node x and two properties (x1: long, x2: string) of the node x; a node y and two properties (y1: long, y2: string) of the node y; and an edge z and two attributes (z1: boolean, z2: string) of the edge z.

As shown in FIG. 3, the graph model can be displayed to the user through a visual interface, enabling the user to edit or modify any node, edge, or their properties within the graph model.

As shown in FIG. 3, when user A edits the graph model, the user intends to modify the node x in the graph model, specifically by adding a new property x3: long to the node x. As shown in FIG. 3, after receiving the operation statement initiated by user A for the graph model, the graph database server may parse the operation statement to determine that the object to be operated is the property x3: long of the node x. Further, after determining that the node x is not locked and that the property x3: long is not locked, the graph database server may lock the property x3: long to successfully add the property x3: long. In addition, other users may receive the new version of the graph model sent by the graph database server, in which the property x3: long has been added.

As shown in FIG. 3, when a user B edits the graph model, the user intends to modify the node x in the graph model, specifically by changing the data type of the property x1: long of the node x from long to string. As shown in FIG. 3, after receiving the operation statement initiated by user B for the graph model, the graph database server may parse the operation statement to determine that the object to be operated is the property x1: long of the node x. Further, after determining that the node x is not locked and that the property x1: long is not locked, the graph database server may lock the property x1: long and modify its data type to string. In addition, other users may receive the new version of the graph model sent by the graph database server, which includes the modified property x1: string.

As shown in FIG. 3, after the operations of user A and user B are committed, that is, after the above modifications are formally written to disk, the properties of the node x in the graph model may include x1: string, x2: string, and x3: long.

As shown in FIG. 3, when user C edits the graph model, the user intends to modify the node y in the graph model, specifically by adding a new property y3: long to the node y. As shown in FIG. 3, after receiving the operation statement initiated by user C for the graph model, the graph database server may parse the operation statement to determine that the object to be operated is the property y3: long of the node y. Further, after determining that the node y is not locked and that the property y3: long is not locked, the graph database server may lock the property y3: long to successfully add the property y3: long. In addition, other users may receive the new version of the graph model sent by the graph database server, in which the property y3: long has been added.

As shown in FIG. 3, after the operations of user C are committed, that is, after the above modifications are formally written to disk, the properties of the node y in the graph model may include: y1: long, y2: string, and y3: long.

In this way, in this application, by independently storing and managing the nodes, edges, and the properties of the nodes and the edges in the graph model, the nodes, edges, and the properties of the nodes and the edges can be individually locked. This enables users A, B, and C, as shown in FIG. 3, to simultaneously edit the graph model, which not only to concurrently edit nodes x and y, but also to simultaneously edit different properties (x1 and x3) of the node x without conflicts, thereby meeting user requirements and significantly enhancing the performance of the graph database.

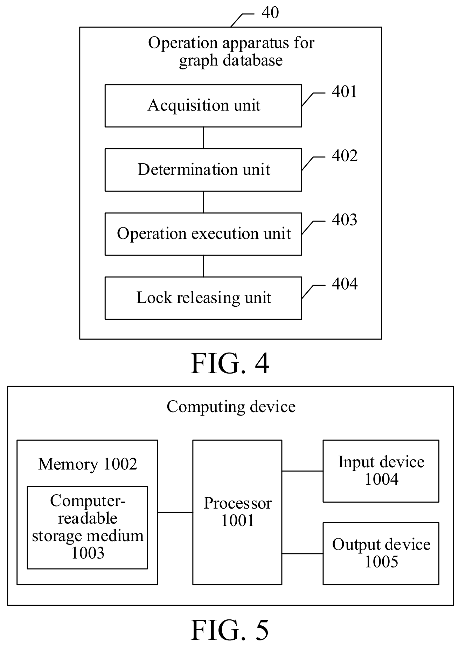

Corresponding to the implementation of the above method flow, the embodiments of this specification further provide an operation apparatus for a graph database. Referring to FIG. 4, FIG. 4 is a schematic structural diagram of an operation apparatus for a graph database according to an exemplary embodiment. The apparatus 40 can be applied to the system architecture shown in FIG. 1, specifically to the graph database server in the system architecture of FIG. 1. The graph database includes nodes, edges, and properties of the nodes and the edges. When a node or edge is locked, the node or edge and all properties of the node or edge are prohibited from being operated on, and when any property of all properties of a node or edge is locked, the property and the node or edge are prohibited from being operated on. As shown in FIG. 4, the apparatus 40 includes:
an acquisition unit 401, configured to acquire an operation statement initiated by a user for the graph database;
a determination unit 402, configured to parse the operation statement and determine, according to a result of the parsing, an object to be operated of the operation statement, the object to be operated including any one of a target node, a target edge, a target property of a target node, or a target property of a target edge; and
an operation execution unit 403, configured to determine whether the object to be operated is prohibited from being operated on, and if not, lock the object to be operated and, upon completion of the locking, execute a plurality of operations included in the operation statement on the object to be operated.

In an illustrated implementation, the apparatus 40 further includes a lock releasing unit 404 which is configured to:
release the lock on the object to be operated upon completion of the execution of the plurality of operations.

In an illustrated implementation, the object to be operated is the target node or the target edge, and the operation execution unit 403 is specifically configured to:
determine whether the target node or the target edge is locked;
further determine, if the target node or the target edge is not locked, whether all properties of the target node or the target edge are locked; and
determine, if all properties of the target node or the target edge are not locked, that the target node or the target edge is not prohibited from being operated on, and lock the target node or the target edge.

In an illustrated implementation, the object to be operated is a target property of the target node or the target edge, and the operation execution unit 403 is specifically configured to:
determine whether the target node or the target edge is locked;
further determine, if the target node or the target edge is not locked, whether the target property of the target node or the target edge is locked; and
determine, if the target property of the target node or the target edge is not locked, that the target property of the target node or the target edge is not prohibited from being operated on, and lock the target property of the target node or the target edge.

In an illustrated implementation, a graph model of the graph database defines metadata of the nodes and the edges, and metadata of the properties of the nodes and the edges; and the metadata of the nodes and the edges and the metadata of the properties of the nodes and the edges are stored and managed independently.

In an illustrated implementation, the metadata of the nodes includes node types, the metadata of the edges includes edge types, and source node types and target node types of the edges, and the metadata of the properties includes property types and data types of property values.

In an illustrated implementation, the metadata of the nodes and the edges is stored in a first data table, and the metadata of the target node or the target edge is located in a corresponding first data row of the first data table.

The operation execution unit 403 is specifically configured to: lock the first data row of the metadata of the target node or the target edge; and execute the plurality of operations included in the operation statement on the metadata of the target node or the target edge.

In an illustrated implementation, the metadata of the properties of the nodes and the edges is stored in a second data table, and the metadata of the target property of the target node or the target edge is located in a corresponding second data row of the second data table.

The operation execution unit 403 is specifically configured to:
lock the second data row of the metadata of the target property of the target node or the target edge; and
execute the plurality of operations included in the operation statement on the metadata of the target property of the target node or the target edge.

In an illustrated implementation, the operation statement is an operation statement for the graph model that is generated by a client of the graph database in response to an editing operation performed by a user on the graph model displayed in a visual interface provided by the client.

The acquisition unit 401 is specifically configured to receive the operation statement for the graph model from the client.

In an illustrated implementation, the operation statement is a DDL statement.

The specific processes for implementing the functions and roles of each unit in the above apparatus 40 are described in detail in the foregoing embodiments, and are not repeated herein. It is to be understood that the apparatus 40 can be implemented in software, in hardware, or by a combination of hardware and software. By way of example, when implemented in software, as a logically defined apparatus, it is formed by the processor (CPU) of the device reading the corresponding computer program instructions into memory and executing them. In terms of hardware, in addition to the CPU and memory, the device housing the above apparatus typically includes other hardware, such as chips for wireless signal transmission and reception, and/or boards or cards for implementing network communication functions.

The apparatus embodiments described above are merely illustrative. The units described as separate components may or may not be physically separate, and the components presented as units may or may not be physical modules, that is, they may be located in a single location or distributed across a plurality of network modules. Part or all of the units or modules may be selected as required to achieve the objectives of the solutions in this specification. A person of ordinary skill in the art may understand and implement the embodiments without creative efforts.

The apparatus, units, and modules described in the above embodiments can be specifically implemented by computer chips or physical entities, or realized by products having specific functions. A typical implementation device is a computer, which may take the form of a personal computer, laptop, cellular phone, camera phone, smartphone, personal digital assistant, media player, navigation device, email sending and receiving device, game console, tablet computer, wearable device, in-vehicle computer, or any combination of these devices.

Corresponding to the above method embodiments, the embodiments of this specification further provide a computing device. Referring to FIG. 5, FIG. 5 is a schematic structural diagram of a computing device according to an exemplary embodiment. The computing device shown in FIG. 5 may be the computing device 100 hosting the graph database server in the system architecture of FIG. 1. The graph database includes nodes, edges, and properties of the nodes and the edges. When a node or edge is locked, the node or edge and all properties of the node or edge are prohibited from being operated on, and when any property of all properties of a node or edge is locked, the property and the node or edge are prohibited from being operated on. As shown in FIG. 5, the computing device includes a processor 1001 and a memory 1002, and may further include an input device 1004 (e.g., a keyboard) and an output device 1005 (e.g., a display). The processor 1001, memory 1002, input device 1004, and output device 1005 may be connected via a bus or by other means. As shown in FIG. 5, the memory 1002 includes a computer-readable storage medium 1003, and the computer-readable storage medium 1003 stores a computer program executable by the processor 1001. The processor 1001 may be a CPU, a microprocessor, or an integrated circuit configured to control the execution of the above method embodiments. When executing the stored computer program, the processor 1001 can perform the various steps of the operation method for a graph database described in the embodiments of this specification, including: acquiring an operation statement initiated by a user for the graph database; parsing the operation statement and determining, according to a result of the parsing, an object to be operated of the operation statement, the object to be operated including any one of a target node, a target edge, a target property of a target node, or a target property of a target edge; and determining whether the object to be operated is prohibited from being operated on, and if not, locking the object to be operated and, upon completion of the locking, executing a plurality of operations included in the operation statement on the object to be operated.

For a detailed description of the above steps of the operation method for a graph database, reference can be made to the preceding content, which is not repeated herein.

Corresponding to the above method embodiments, the embodiments of this specification further provide a computer-readable storage medium having computer programs stored therein, which, when executed by a processor, perform the various steps of the operation method for a graph database described in the embodiments of this specification. For details, reference can be made to the descriptions of the above embodiments, which are not repeated herein.

The foregoing descriptions are merely exemplary embodiments of this specification, but are not intended to limit this specification. Any modification, equivalent replacement, or improvement made without departing from the spirit and principle of this specification shall fall within the protection scope of this specification.

In a typical configuration, the terminal device includes one or more CPUs, input/output interfaces, network interfaces, and memory.

The memory may include non-permanent storage in a computer-readable medium, such as random-access memory (RAM) and/or non-volatile memory, including read-only memory (ROM) or flash memory. The memory is an example of a computer-readable medium.

The computer-readable medium includes permanent and non-permanent, as well as removable and non-removable media, and may be implemented by any method or technology for storing information. The information may be a computer-readable instruction, a data structure, a program module, or other data.

Examples of computer-readable storage media include, but are not limited to, phase-change memory (PRAM), static random-access memory (SRAM), dynamic random-access memory (DRAM), other types of RAM, read-only memory (ROM), electrically erasable programmable read-only memory (EEPROM), flash memory or other memory technologies, compact disc read-only memory (CD-ROM), digital versatile disc (DVD) or other optical storage, magnetic cassette tapes, magnetic disk storage, or other magnetic storage devices, or any other non-transitory medium capable of storing information accessible by a computing device. As defined herein, the computer-readable medium does not include transitory computer-readable media, such as modulated data signals or carriers.

It is to be further noted that the terms "comprise", "include", or any other variations thereof are intended to cover a non-exclusive inclusion, such that a process, method, article, or device including a series of elements includes not only such elements but also other elements not expressly listed, as well as elements inherent to such a process, method, article, or device. Without further limitation, an element defined by the statement "include a/an..." does not exclude the presence of additional identical elements in the process, method, article, or device that includes the element.

A person skilled in the art should understand that the embodiments of this specification may be implemented as a method, a system, or a computer program product. Therefore, the embodiments of this specification may be implemented entirely in hardware, entirely in software, or in a combination of software and hardware. Moreover, the embodiments of this specification may take the form of a computer program product implemented on one or more computer-readable storage media that include computer-usable program code, including but not limited to magnetic disk storage, CD-ROM, optical storage, or the like.

## Claims

1. An operation method for a graph database, wherein the graph database comprises nodes, edges, and properties of the nodes and the edges, wherein when a node or edge is locked, the node or edge and all properties of the node or edge are prohibited from being operated on, and when any property of all properties of a node or edge is locked, the property and the node or edge are prohibited from being operated on, the method comprising:
acquiring an operation statement initiated by a user for the graph database;
parsing the operation statement and determining, according to a result of the parsing, an object to be operated of the operation statement, the object to be operated comprising any one of a target node, a target edge, a target property of a target node, or a target property of a target edge; and
determining whether the object to be operated is prohibited from being operated on, and if not, locking the object to be operated and, upon completion of the locking, executing a plurality of operations comprised in the operation statement on the object to be operated.

2. The method according to claim 1, further comprising:
releasing the lock on the object to be operated upon completion of the execution of the plurality of operations.

3. The method according to claim 1, wherein the object to be operated is the target node or the target edge; and determining whether the object to be operated is prohibited from being operated on, and if not, locking the object to be operated comprises:
determining whether the target node or the target edge is locked;
further determining, if the target node or the target edge is not locked, whether all properties of the target node or the target edge are locked; and
determining, if all properties of the target node or the target edge are not locked, that the target node or the target edge is not prohibited from being operated on, and locking the target node or the target edge.

4. The method according to claim 3, wherein the object to be operated is a target property of the target node or the target edge; and determining whether the object to be operated is prohibited from being operated on, and if not, locking the object to be operated comprises:
determining whether the target node or the target edge is locked;
further determining, if the target node or the target edge is not locked, whether the target property of the target node or the target edge is locked; and
determining, if the target property of the target node or the target edge is not locked, that the target property of the target node or the target edge is not prohibited from being operated on, and locking the target property of the target node or the target edge.

5. The method according to claim 4, wherein a graph model of the graph database defines metadata of the nodes and the edges, and metadata of the properties of the nodes and the edges; and the metadata of the nodes and the edges and the metadata of the properties of the nodes and the edges are stored and managed independently.

6. The method according to claim 5, wherein the metadata of the nodes comprises node types, the metadata of the edges comprises edge types, and source node types and target node types of the edges, and the metadata of the properties comprises property types and data types of property values.

7. The method according to claim 5, wherein the metadata of the nodes and the edges is stored in a first data table, and the metadata of the target node or the target edge is located in a corresponding first data row of the first data table;
locking the target node or the target edge comprises:
locking the first data row of the metadata of the target node or the target edge; and
executing a plurality of operations comprised in the operation statement on the object to be operated comprises:
executing the plurality of operations comprised in the operation statement on the metadata of the target node or the target edge.

8. The method according to claim 5, wherein the metadata of the properties of the nodes and the edges is stored in a second data table, and the metadata of the target property of the target node or the target edge is located in a corresponding second data row of the second data table;
locking the target property of the target node or the target edge comprises:
locking the second data row of the metadata of the target property of the target node or the target edge; and
executing a plurality of operations comprised in the operation statement on the object to be operated comprises:
executing the plurality of operations comprised in the operation statement on the metadata of the target property of the target node or the target edge.

9. The method according to claim 5, wherein the operation statement is an operation statement for the graph model that is generated by a client of the graph database in response to an editing operation performed by a user on the graph model displayed in a visual interface provided by the client; and
acquiring an operation statement initiated by a user for the graph database comprises: receiving an operation statement for the graph model from the client.

10. The method according to any one of claims 1 to 9, wherein the operation statement is a data definition language (DDL) statement.

11. A computing device comprising a memory and a processor, the memory having a computer program or instructions executable by the processor stored therein, and the processor, when executing the computer program or instructions, performing the method according to any one of claims 1 to 10.

12. A computer-readable storage medium having a computer program or instructions stored therein, the computer program or instructions, when executed by a processor, implementing the method according to any one of claims 1 to 10.

13. A computer program product comprising a computer program or instructions, the computer program or instructions, when executed by a processor, implementing the method according to any one of claims 1 to 10.
